# EUROPÄISCHE PATENTSCHRIFT

(11) **EP 4 127 481 B1**
(45) Veröffentlichungstag und Bekanntmachung des Hinweises auf die Patenterteilung: **18.12.2024**
(21) Anmeldenummer: 21716107.4
(22) Anmeldetag: 25.03.2021
(51) Int. Cl.: F04D 17/02, F04D 29/42, F04D 29/58, F28D 1/02, F24T 10/30, F24F 1/0022, F24F 12/00, F24V 50/00

(54) **WÄRMETAUSCHERANORDNUNG**
HEAT EXCHANGER ARRANGEMENT
SYSTÈME D'ÉCHANGEUR DE CHALEUR

(30) Priorität: 26.03.2020 DE 102020108377; 25.09.2020 DE 102020125030
(43) Veröffentlichungstag der Anmeldung: 08.02.2023
(73) Patentinhaber: Envola GmbH, 89081 Ulm (DE)
(72) Erfinder: SCHECHNER, Alexander, 89075 Ulm (DE); IHLE, Gerhard, 89075 Ulm (DE)
(74) Vertreter: Baur & Weber Patentanwälte PartG mbB
(86) Internationale Anmeldenummer: PCT/EP2021/057787
(87) Internationale Veröffentlichungsnummer: WO 2021/191371

(56) Entgegenhaltungen:
- DE-C- 838 188
- JP-A- H09 303 853
- JP-A- S55 155 125
- US-A- 2 944 801

## Beschreibung

Die Erfindung betrifft eine Wärmetauscheranordnung.

Die Verwendung fossiler Energieträger ist nicht nur zunehmend unwirtschaftlich, sondern wird auch aufgrund der damit verbundenen negativen Auswirkungen auf das Klima zunehmend in Frage gestellt. Neben einer Steigerung der Nutzung regenerativer Energiequellen sind daher auch effiziente Systeme zur Energiespeicherung von Nöten, die in Kombination mit intelligenten Steuerungen beispielsweise beim Heizen oder beim Kühlen von Gebäuden oder von Anlagen für einen reduzierten Energieverbrauch sorgen können. Aufgrund derartiger Maßnahmen lässt sich unabhängig vom verwendeten Energieträger ein hohes Einsparpotential schaffen, was auch die damit verbundenen Installationskosten auffängt.

Aus der DE 29 26 610 A1 ist ein Speicher zur Bereitstellung der Eingangswärmeenergie auf niederem Temperaturniveau für Wärmepumpenanlagen bekannt, die diese Energie aufnehmen und auf höherem Temperaturniveau wieder abgeben. Dabei ist ein Wasserbecken so gestaltet, dass sein Wasserinhalt ohne Beckenbeschädigung einfrieren kann und dass ein am Beckenboden befindliches oder in den Beckenboden eingelassenes Wärmetauschersystem erlaubt, die Abkühlungs- und Gefrierwärme dieses Beckens der Kaltseite einer Wärmepumpe zuzuführen.

Neben der Verwendung eines künstlichen Wasserbeckens ist es auch bekannt, natürliche Gewässer als Speichermedium zu nutzen.

So ist aus der DE 10 2015 104 909 A1 ein Energiespeicher bekannt, der einen Wärmetauscher aufweist, der auf einem vorzugweise über eine erste Zuleitung mit Wasser befüllbarem, als See ausgebildetem Unterbecken schwimmend angeordnet ist, wobei über eine zweite Zuleitung Wasser aus dem Unterbecken und über eine dritte Zuleitung den Wärmetauscher durchdringendes Kühlmittel einer Wärmepumpe in getrennten Kreisläufen zuführbar ist, so dass Energie über den Wärmetauscher unter Vereisung des Wassers des Unterbeckens oder in Form von sensibler Wärme aus dem Wasser des Unterbeckens entnehmbar und an einen Verbraucher zur Wärmeabgabe und/oder zur Kälteabgabe weiterleitbar ist.

Des Weiteren ist aus der DE 10 2015 121 177 A1 eine schwimmende Vorrichtung zum Einbringen von Wärmeenergie in ein Gewässer sowie zum Entziehen von Wärmeenergie aus dem Gewässer bekannt, die einen Wasserwärmetauscher aufweist, der nach dem Einsetzen der Vorrichtung in das Gewässer in dieses eintaucht und einen Zulauf und einen Ablauf für eine Wärmeträgerflüssigkeit aufweist, die Wärmeenergie an das Gewässer abgeben oder dem Gewässer Wärmeenergie entziehen kann. Die Vorrichtung weist darüber hinaus einen Luftwärmetauscher auf, der von Umgebungsluft durchdrungen werden kann und darüber hinaus einen Einlass für aus dem Gewässer stammendes Wasser mit einem entsprechenden Auslass aufweist, so dass Wasser aus dem Gewässer durch den Luftwärmetauscher strömen kann, wobei Wärmeenergie zwischen der dem Luftwärmetauscher durchströmenden Umgebungsluft und dem den Luftwärmetauscher durchströmenden Wasser übertragbar ist.

Die oben beschriebenen Vorrichtungen wirken üblicherweise mit einer in einem Gebäude installierten Wärmepumpe zusammen. Diese kann beispielsweise über das Stromnetz oder einen eigenen Stromspeicher mit elektrischer Energie versorgt werden.

Aus der WO 2005/096715 A2 ist eine Wärmetauscheranordnung bekannt, bei der ein Radiallüfter zu einem Vorwärtsbetrieb oberhalb eines Wärmetauschers angeordnet ist, so dass die Zuluft durch den Wärmetauscher hindurch zur im Radiallüfter liegenden Saugseite transportiert wird und anschließend über die Druckseite zu einer Abluftöffnung hin transportiert wird.

In der DE 10 2007 003 568 B4 ist eine Lüfteranordnung mit einem Radiallüfter angegeben, wobei der Radiallüfter in einem Vorwärtsbetrieb Luft entlang seiner Mittelachse ansaugt und über eine außenliegende Nachleitanordnung abgibt.

In der DE 10 2017 102 303 A1 wird eine Vorrichtung zur Wärmegewinnung angegeben, die einen Wärmetauscher umfasst, der in einem im Erdreich versenkten Gehäuse angeordnet ist, das einen Lufteinlass und einen Luftauslass aufweist, zwischen denen ein mittels eines Lüfters erzeugter Luftstrom strömt. Der Wärmetauscher ist in dem Unterflurgehäuse angeordnet, um störende Geräuschemissionen zu vermeiden. Das Unterflurgehäuse ist innerhalb einer Erdauskofferung angeordnet, die mit einem Drainagematerial wie beispielsweise Schotter befüllt ist.

Die JP S55 155125 A zeigt ein dünnes Klimagerät, bei dem ein blasender Zentripetalventilator gegenüber einer Luftausblasöffnung vorgesehen ist und ein Wärmetauscher um ihn herum angeordnet ist.

Die JP H09 303853 A zeigt die Anordnung eines Rektifikationswärmetauschers an einem Luftstromdurchgang, der sich zwischen einem Querstromventilator und einem Innenraum-Wärmetauscher befindet.

Insbesondere die zuletzt angeführte Schrift weist auf die Anforderungen bezüglich der entstehenden Lüftergeräusche hin.

Da trotz der oben genannten Maßnahmen die Geräuschkulisse von Wärmetauscheranordnungen, insbesondere durch die akustischen Emissionen der Lüfter, oberhalb der Wahrnehmungsschwelle der meisten Personen liegt, stellt sich nun die Aufgabe, eine Wärmetauscheranordnung anzugeben, deren akustische Emissionen noch weiter reduziert sind.

Diese Aufgabe wird durch die Merkmale des Patentanspruchs 1 gelöst. Weitere vorteilhafte Ausgestaltungen der Erfindung sind jeweils Gegenstand der Unteransprüche.

Beschreibung, insbesondere im Zusammenhang mit der Zeichnung, charakterisiert und spezifiziert die Erfindung zusätzlich.

Gemäß der Erfindung wird eine Wärmetauscheranordnung angegeben umfassend ein Gehäuse, in dem umfangseitig mindestens eine Zuluftöffnung angeordnet ist, einen Deckel, der das Gehäuse an einer Oberseite überdeckt und in dem mindestens eine Abluftöffnung angeordnet ist, wobei innerhalb des Gehäuses ein rückwärtsbetriebener Radiallüfter so angeordnet ist, dass er einen bezüglich seiner Rotationsachse radial nach innen gerichteten Luftstrom zwischen der Zuluftöffnung und der Abluftöffnung erzeugen kann, der mindestens einen im Gehäuse angeordneten Luftwärmetauscher durchströmt. Die Zuluftöffnung ist zwischen Deckel und Gehäuse angeordnet, und der durch den Radiallüfter erzeugte Luftstrom strömt durch die Abluftöffnung nach oben gerichtet ab. Es hat sich überraschenderweise herausgestellt, dass ein rückwärtslaufender Radiallüfter geeignet ist, die gewünschte Lüftungsleistung bei minimaler akustischer Emission bereitzustellen. Üblicherweise werden Radiallüfter mit einem radial nach außen gerichtetem Luftstrom im Vorwärtsbetrieb genutzt, wobei die Luft zur Rotationsachse hin angesaugt wird. Für radiales Abströmen wird typischerweise ein Axiallüfter eingesetzt. Der Vorteil des rückwärtslaufenden Radiallüfters gegenüber einem Axiallüfter ist, dass dieser mit geringer Drehzahl betrieben werden kann, so dass durch den Lüfterlauf nahezu keine wahrnehmbaren akustischen Emissionen entstehen. Unter Rückwärtslauf wird verstanden, dass die Saugseite des Radiallüfters bezüglich dessen Rotationsachse außerhalb der Schaufeln liegt, wohingegen die Druckseite bezüglich der Rotationsachse innerhalb des Radiallüfters liegt. Ein Luftstrom wird durch den Radiallüfter im Rückwärtsbetrieb demnach von der außenliegenden Saugseite zur innenliegenden Druckseite erzeugt.

Der Luftwärmetauscher ist innerhalb eines Gehäuses angeordnet, wobei das Gehäuse eine bezüglich einer Mittelachse außenliegende Zuluftöffnung und eine innenliegende Abluftöffnung aufweist, zwischen denen mittels des Radiallüfters ein horizontaler Luftstrom erzeugt wird, der den Luftwärmetauscher durchströmt beziehungsweise an Lamellen des Luftwärmetauschers auf fachübliche Weise vorbeiströmt. Die Bezeichnung innerhalb und außerhalb bezieht sich dabei auf von der Rotationsachse des Radiallüfters ausgehende Richtungen, wobei ein Bauteil, das näher an der Rotationsachse liegt, als innenliegend bezeichnet wird. Bei der Mittelachse muss es sich nicht um die geometrische Mitte des Gehäuses handeln, vielmehr ist unter der Mittelachse ein Bezugspunkt innerhalb des Gehäuses zu verstehen, um die verlaufend von innen nach außen zunächst der Radiallüfter angeordnet ist, danach weiter außen der Luftwärmetauscher und danach weiter außen die Zuluftöffnung angeordnet ist. Üblicherweise aber nicht zwangsläufig liegen die Rotationsachse und die Mittelachse aufeinander. Die Abluftöffnung wird über der Druckseite des Radiallüfters angeordnet, so dass der auf der Saugseite horizontal erzeugte Luftstrom auf der Druckseite das Gehäuse in vertikaler Richtung verlassen kann. Die Wärmetauscheranordnung wird üblicherweise so angeordnet, dass die Rotationsachse des Radiallüfters senkrecht zum Boden ausgerichtet ist. Gegenüber den üblicherweise verwendeten Axiallüftern hat ein Radiallüfter im Rückwärtsbetrieb den Vorteil, dass dieser mit einem größeren Durchmesser ausgelegt werden kann, sodass bei niedrigen Drehzahlen und niedrigen Strömungsgeschwindigkeiten der Luft hohe Luftvolumina bewegt werden können. Der Radiallüfter wird vorteilhafterweise im Gehäuse in Richtung seiner Rotationsachse nach oben und unten umbaut. Die Umbauung kann auch Bestandteil des Gehäuses oder anderer Komponenten der Wärmetauscheranordnung sein. Der maximal transportierbare Luftstrom kann durch die Wahl der Abmessungen des Radiallüfters entsprechend vorgegeben werden. Während des Betriebs der Wärmetauscheranordnung wird von einer externen Wärmepumpe ein Trägermedium durch die Wärmetauscheranordnung gepumpt und der Radiallüfter im Rückwärtslauf betrieben. Demnach wird Umgebungsluft durch die Zuluftöffnungen in das Gehäuse gesaugt, anschließend radial durch die Luftkanäle der Lamellen des Luftwärmetauschers zum Radiallüfter geführt, dann durch den Radiallüfter zur Druckseite befördert und zuletzt axial durch die Abluftöffnung aus dem Gehäuse ausgeleitet. Der Luftwärmetauscher kann entweder umlaufend um den Radiallüfter angeordnet sein oder aber einzelne Blöcke umfassen, die um den Radiallüfter angeordnet sind. Die Zuluftöffnungen sind so angeordnet und bemessen, dass der Luftwärmetauscher von Umgebungsluft durchströmt werden kann.

Gemäß einer Ausführungsform weist der Radiallüfter eine Vielzahl von Schaufeln auf, die von einer Nachleitanordnung mit einer Vielzahl von Lamellen umgeben sind.

Demnach wird innerhalb des Radiallüfters eine Nachleitanordnung angeordnet, die Lamellen aufweist, die den Luftstrom auf der Druckseite des Radiallüfters zur Rotationsachse des Radiallüfters hin und/oder in Richtung der Abluftöffnungen leiten. Es hat sich überraschenderweise gezeigt, dass mittels der Nachleitanordnung die akustische Emission der Wärmetauscheranordnung abermals reduziert werden kann. Insgesamt konnten akustische Emissionen durch die gemeinsame Verwendung eines rückwärtslaufenden Radiallüfters und einer innenliegenden Nachleitanordnung bei vergleichbarer Lüfterleistung weiter reduziert werden.

Gemäß einer weiteren Ausführungsform sind die Schaufeln des Radiallüfters und die Lamellen der Nachleitanordnung entgegengesetzt gekrümmt.

Indem die Lamellen und die Schaufeln unterschiedlich gekrümmt sind, wird erreicht, dass die Luft an den Schaufeln des Radiallüfters abgeleitet wird. Der vom Radiallüfter kommende Luftstrom wird von der Nachleitanordnung abgestreift und in Richtung der Abluftöffnung geleitet oder zum Mittelpunkt der Nachleitanordnung, der idealer Weise mit der Rotationsachse des Radiallüfter zusammenfällt, geleitet, sodass dort ein Überdruck entsteht, der durch die Abluftöffnung entweicht. Besonders vorteilhaft ist es, wenn die Schaufeln des Radiallüfters bezogen auf den Rückwärtsbetrieb vorwärts gekrümmt sind und die Lamellen der Nachleitanordnung rückwärts gekrümmt sind.

Gemäß einer weiteren Ausführungsform der Erfindung sind die Schaufeln des Radiallüfters und/oder die Lamellen der Nachleitanordnung entlang und parallel zu ihrer Hochachse mit gleichbleibender Krümmung ausgebildet.

Jeweils eine Schaufel oder Lamelle weist somit einen zu ihrer Hochachse parallel versetzen Kreismittelpunkt auf, um den herum die Schaufel mit einem gleichbleibenden Radius und somit mit einer gleichbleibenden Krümmung ausgebildet ist. Alternativ könnten die Schaufeln oder Lamellen auch eine nicht gleichbleibende Krümmung aufweisen, insbesondere derart, dass die Krümmung zur Rotationsachse hin abnimmt. Der Radiallüfter ist somit vorteilhafterweise zylinderförmig ausgebildet, so dass die Hochachsen der Schaufeln parallel zueinander und parallel zur Rotationsachse angeordnet sind, wobei die Rotationsachse gleichzeitig im Wesentlichen parallel zur Mittelachse des Gehäuses ausgerichtet ist. Die Mittelachse des Gehäuses steht normal auf dem Deckel des Gehäuses. Die Nachleitanordnung weist vorteilhafterweise ebenfalls eine zylindrische Form auf, bei der die Hochachsen der Lamellen parallel zueinander und parallel zur Rotationsachse des Radiallüfters ausgerichtet sind.

Gemäß einer weiteren Ausführungsform der Erfindung bilden sich zwischen den Lamellen (LA) nach Innen verjüngende Bereiche, so dass der Luftstrom nach Innen hin eine Druckerhöhung erfährt.

Aufgrund dieser Konfiguration erfolgt eine Druckerhöhung des Luftstroms im Inneren, so dass auch bei niedrigen Drehzahlen eine ausreichende Durchströmung des Luftwärmetauschers im Rückwärtsbetrieb des Radiallüfters möglich ist. Dabei schieben mehrere Schaufeln die Luft radial nach Innen. Da sich im verjüngenden Bereich eine Druckerhöhung einstellt, wird die Luft, ohne in Drehbewegung versetzt zu werden, axial entweichen

Erfindungsgemäß ist die Zuluftöffnung zwischen Deckel und Gehäuse angeordnet.

Demnach sind die Zuluftöffnungen horizontal zur Mittelachse des Gehäuses hin verlaufend ausgerichtet. Dies hat den Vorteil, dass thermische Kurzschlüsse zwischen der Abluft und der Zuluft vermieden oder reduziert werden können. Außerdem eignet sich eine derartige Anordnung zur Verwendung mit einem System zur Energiespeicherung, wie weiter unten noch beschrieben wird.

Gemäß einer weiteren Ausführungsform der Erfindung überdecken sich der rückwärtsbetriebene Radiallüfter und die Nachleitanordnung entlang der Rotationsachse des Radiallüfters zumindest abschnittsweise.

Demnach liegen die Zuluftöffnungen der Luftwärmetauscher der Radiallüfter und die Nachleitanordnung zumindest entlang eines gemeinsamen Radialstrahls um die Mittelachse übereinander. Horizontal von der Zuluftöffnung zur Druckseite des Radiallüfters strömende Luft verläuft somit am Luftwärmetauscher, dem Radiallüfter und der Nachleitanordnung vorbei.

Gemäß einer weiteren Ausführungsform der Erfindung wird der rückwärtsbetriebene Radiallüfter mittels eines Elektromotors angetrieben.

Durch die Verwendung eines Elektromotors kann der benötigte Luftstrom auf einfache Weise variiert werden. Der Elektromotor kann in einer Isolationsschicht angeordnet sein, um vom Motor ausgehende Geräusche innerhalb des Gehäuses weitestgehend zu absorbieren.

Vorteilhaft ist die Verwendung der Wärmetauscheranordnung zusammen mit einem Wasserspeicher. Ein solches System zur Energiespeicherung und zum Wärmeaustausch umfasst eine vorgenannte Wärmetauscheranordnung, einen Wasserspeicher zur Speicherung von Wärme, einen in den Wasserspeicher ragenden Wasserwärmetauscher und eine Wärmepumpe, die ein Medium zum Wärmetausch zwischen dem Luftwärmetauscher der Wärmetauscheranordnung und/oder dem Wasserwärmetauscher befördern kann, so dass Wärme ausgetauscht werden kann, wobei der Wasserspeicher in einem Erdloch versenkt werden kann und die Wärmetauscheranordnung in Richtung der Mittelachse des Gehäuses so auf dem Wasserspeicher angeordnet ist, dass zumindest die Zuluftöffnungen über das Erdreich hinausragen.

Demnach wird eine der vorgenannten Wärmetauscheranordnungen mit einem Energiespeicher kombiniert. Der Energiespeicher speichert dabei Wärme innerhalb eines Wasserreservoirs bzw. kann Wärme von einer Wärmepumpe ausgehend in das Wasserreservoir abgeben. Der Betrieb des Wasserwärmetauschers, der Wärmetauscheranordnung und der Wärmepumpe wird dabei von einer Steuereinrichtung geregelt. Der Wasserspeicher und die Wärmetauscheranordnung können ein gemeinsames Gehäuse umfassen.

Nachfolgend werden einige Ausführungsbeispiele anhand der Zeichnung näher erläutert. Es zeigen:
- Figur 1: eine ersten Ausführungsform der Wärmetauscheranordnung in einer geschnittenen Seitenansicht,
- Figur 2: die Wärmetauscheranordnung aus Figur 1 in einer durch die Mittelachse geschnittenen Draufsicht,
- Figur 3: eine weitere Ausführungsform der Wärmetauscheranordnung in einer durch die Mittelachse geschnittenen Draufsicht,
- Figur 4: einen Radiallüfter mit Nachleitanordnung gemäß einer ersten Ausführungsform in einer teilweise geschnittenen perspektivischen Darstellung,
- Figur 5: den Radiallüfter mit Nachleitanordnung aus Figur 4 in einer Querschnittsansicht,
- Figur 6: ein System zur Energiespeicherung in einer geschnittenen Seitenansicht,
- Figur 7: einen Radiallüfter gemäß einer zweiten Ausführungsform in einer perspektivischen Darstellung,
- Figur 8: den Radiallüfter aus Figur 7 in einer Querschnittsansicht, und
- Figur 9: den Radiallüfter aus Figur 7 in einer weiteren perspektivischen Darstellung.

In den Figuren sind gleiche oder funktional gleich wirkende Bauteile mit den gleichen Bezugszeichen versehen.

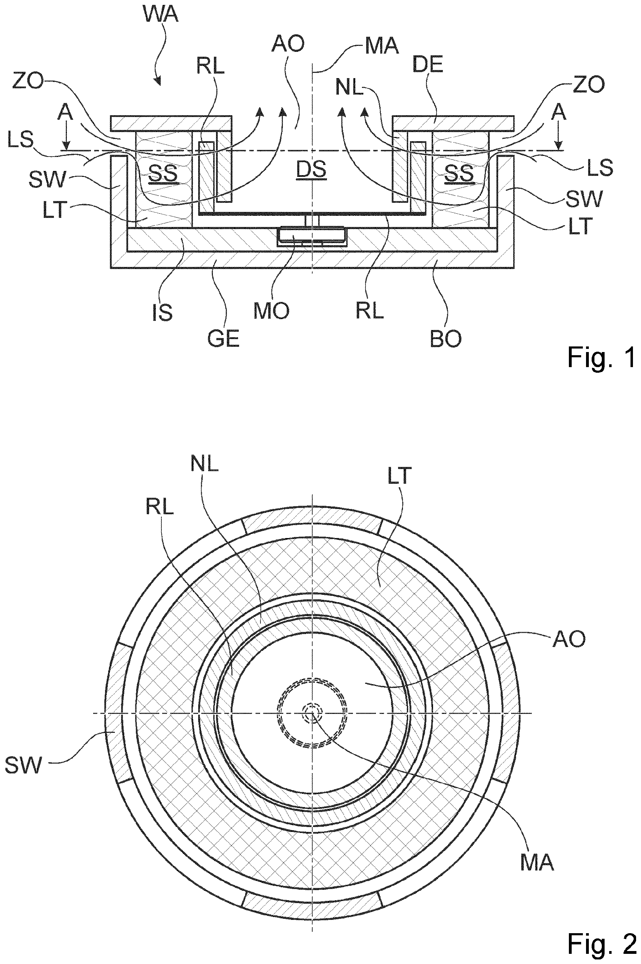

Unter Bezugnahme auf Figur 1 wird nachfolgend eine erste Ausführungsform einer erfindungsgemäßen Wärmetauscheranordnung WA beschrieben. Die Wärmetauscheranordnung umfasst ein Gehäuse GE mit Zuluftöffnungen ZO und bezogen auf die Zuluftöffnungen ZO innenliegende Abluftöffnungen AO, wobei die Bezeichnung innenliegend und außenliegend bezüglich einer Mittelachse MA die normal auf einem Deckel DE des Gehäuses sitzt und das Gehäuse durchdringt verwendet wird.

Von den Zuluftöffnungen ZO ausgehend innenliegend ist ein Luftwärmetauscher LT angeordnet. Noch weiter innenliegend ist ein Radiallüfter RL angeordnet an den sich innenliegend eine Nachleiteranordnung NL anschließt. Der Radiallüfter RL wird mittels einer Elektromotors MO in einem Rückwärtsbetrieb angetrieben, sodass ein Luftstrom LS von den Zuluftöffnungen ZO durch den Luftwärmetausche LT, den Radiallüfter RL und die Nachleitanordnung NL hindurch zur Abluftöffnung AO strömt. Demnach befindet sich der Luftwärmetauscher LT auf einer Saugseite SS des Radiallüfters RL, wohingegen sich die Nachleitanordnung NL und die Abluftöffnung AO auf der Druckseite DS des Radiallüfters RL befindet. Der Elektromotor MO ist innerhalb einer Isolationsschicht IS zur akustischen und/ oder thermischen Dämmung angeordnet.

Der Luftstrom LS durchquert das Gehäuse GE von den Zuluftöffnungen ZO ausgehend weitestgehend horizontal, verlässt das Gehäuse GE durch die Abluftöffnung AO hingegen vertikal. Bei einem Vorwärtsbetrieb des Radiallüfters RL wie er gemeinhin für üblich erachtet wird wäre die Strömungsrichtung umgekehrt. So würde im vorwärts Betrieb Luft von der Rotationsachse RA des Radiallüfters RL herkommend horizontal nach außen zu den Zuluftöffnungen ZO befördert. Von einer nicht dargestellten Wärmepumpe wird ein Trägermedium zum Luftwärmetauscher LT gepumpt. In Luftkanälen LK des Luftwärmetauschers LT wird dann Wärme zwischen der Umgebungsluft und dem Trägermedium ausgetauscht.

In Figur 2 ist einer entlang der Achse AA geschnittene Draufsicht der Wärmetauscheranordnung aus Figur 1 dargestellt. Von außen nach innen umfasst die Wärmetauscheranordnung WA ein Gehäuse GE mit Seitenwänden SW, einen Luftwärmetauscher LT, einen Radiallüfter RL, eine Nachleitanordnung NL, eine Abluftöffnung AO. Eine Mittelachse MA des Gehäuses GE verläuft durch den Mittelpunkt der Wärmetauscheranordnung. Die Mittelachse MA läuft nicht zwangsläufig durch den geometrischen Mittelpunkt des Gehäuses GE, sondern fällt üblicherweise mit der Rotationsachse des Radiallüfters RL zusammen und bildet den Bezugspunkt zur Anordnung aller weiteren Bauteile. Die Nachleitanordnung NL ist als Stator ausgebildet, um den sich der Radiallüfter RL dreht.

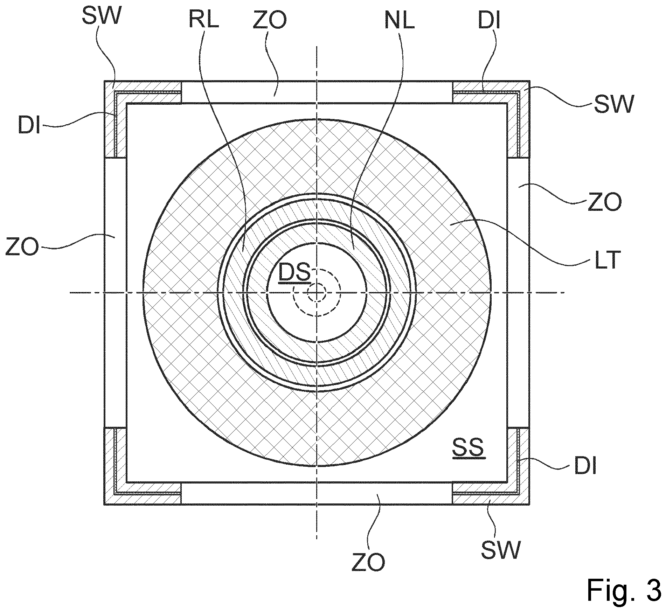

In Figur 3 wird eine alternative Ausführungsform der Wärmetauscheranordnung WA dargestellt, bei der das Gehäuse GE einen rechteckigen Querschnitt aufweist. Der Luftwärmetauscher LT ist wiederum zwischen den Zuluftöffnungen ZO und der Abluftöffnung AO angeordnet. Die Luftwärmetauscher LT befinden sich auf der Saugseite SS des rückwärtsbetriebenen Radiallüfters, wohingegen die Nachleitanordnung NL auf der Druckseite DS des Radiallüfters RL angeordnet ist. Die Luftwärmetauscher LT korrespondieren in ihrer Ausdehnung mit den Zuluftöffnungen ZO. Entlang der Auflageflächen des Deckels DE auf den Seitenwänden SW des Gehäuses GE können optional Dichtungen DI angeordnet sein, die verhindern, dass Luft durch die Spalten zwischen dem Deckel DE und den Seitenwänden SW angesaugt wird. Eine derartige Anordnung ist insbesondere bei Verwendung eines freistehenden Wärmetauscheranordnung WA vorteilhaft, die nach Aufbau von dem Gehäuse GE als Einhausung umgeben werden soll, um diese vor Beschädigung zu schützen.

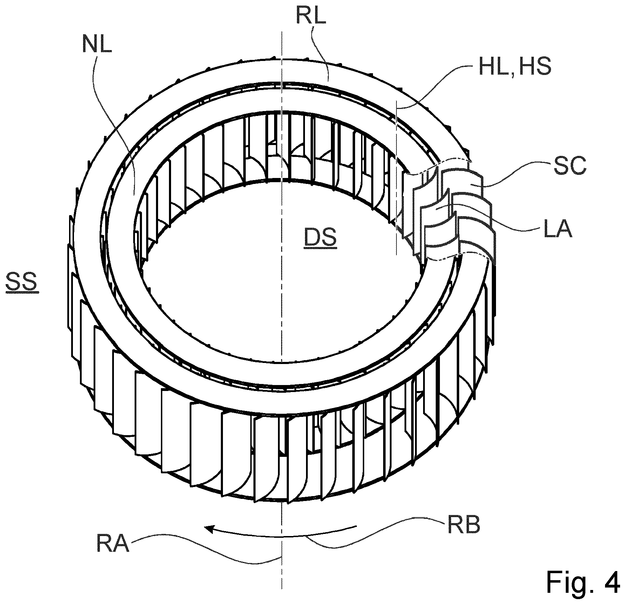

In Figur 4 ist der Radiallüfter RL und die Nachleitanordnung NL in einer perspektivischen Ansicht dargestellt, wobei Teile der Darstellung geschnitten sind. Der Radiallüfter RL weist Schaufeln SC auf, die vorwärts gekrümmt sind und deren Schaufelhochachse HS parallel zur Rotationsachse RA des Radiallüfters RL verlaufen. Die Nachleitanordnung NL weist Lamellen LA auf, die bezüglich der Drehrichtung im rückwärts Betrieb RB rückwärtsgekrümmt angeordnet sind und deren Lamellen Hochachse HL ebenfalls parallel zur Rotationsachse RA des Radiallüfters RL verlaufen. Innenliegend befindet sich aufgrund des Rückwärtsbetriebes RB die Druckseite DS, außenliegend hingegen die Saugseite SS. Während des Rückwärtsgebetriebes RB wird Luft durch die Schaufeln SC auf der Saugseite SS angezogen und in Richtung der Druckseite DS gedrückt. Die Nachleitanordnung greift den vom Radiallüfter RL erzeugten Luftstrom auf der Druckseite DS ab und leitet diesen in Richtung der Rotationsachse RA.

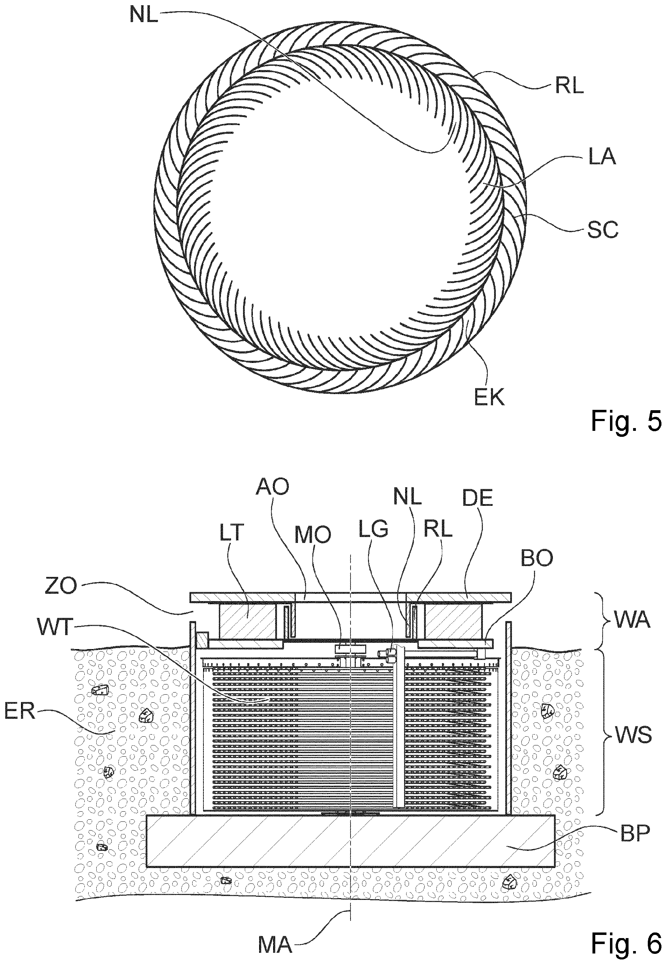

Figur 5 zeigt die Anordnung aus Radiallüfter RL zusammen mit der Nachleitanordnung NL in einer Schnittansicht senkrecht zur Rotationsachse RA, welche in der gewählten Darstellung senkrecht zur Blattebene wäre. Man erkennt, dass die Lamellen LA der Nachleitanordnung NL sowie die Schaufeln SC des Radiallüfters RL so ausgebildet sind, dass sich jeweils zwischen benachbarten Unterteilungen ein Expansionskanal EK ausbildet, der für eine Druckänderung zwischen der Saugseite und der Druckseite sorgt. Aufgrund dieser Konfiguration erfolgt eine Umsetzung der Geschwindigkeit des Luftstroms zur Änderung des Drucks des Luftstroms, so dass auch bei niedrigen Drehzahlen eine ausreichende Durchströmung des Luftwärmetauschers im Rückwärtsbetrieb des Radiallüfters RL möglich ist. Der Rückwärtsbetrieb des Radiallüfters RL ist für die Anwendung bei den hier vorgestellten Luftwärmetauschern besonders gut geeignet, da sich das seitliche Einströmen von Luft über die Zuluftöffnungen ZO und das nach oben gerichtete Abströmen des Luftstroms durch die Abluftöffnungen AO perfekt mit einem rückwärts betriebenen Radiallüfter ergänzen. Besonders vorteilhaft ist die Kombination des Luftwärmetauschers LT mit einem weiteren Wärmetauscher, der in einer Flüssigkeit eingebracht ist. Ein derartiges System wird nachfolgend detaillierter vorgestellt.

In Figur 6 wird ein System zur Energiespeicherung dargestellt, welches eine Wärmetauscheranordnung WA und einen Wasserspeicher WS zur Speicherung von Wärme umfasst. Im Wasserspeicher WS ist ein Wasserwärmetauscher WT angeordnet. Durch den Wasserwärmetauscher WT oder den Luftwärmetauscher LT der Wärmetauscheranordnung WA kann mittels einer nicht dargestellten Wärmepumpe ein Transportmedium gepumpt werden, das dem Wärmeaustausch dient. Das Transportmedium wird von der Wärmepumpe aus in die Leitungen LG gepumpt, die zum Luftwärmetauscher LT und zum Wasserwärmetauscher WT führen. Die Wärmetauscheranordnung WA ist bezüglich der Mittelachse MA des Gehäuses GE über dem Wasserspeicher WS angeordnet. Der Wasserspeicher WS ist innerhalb eines Erdlochs im Erdreicht ER angeordnet, wobei die Zuluftöffnungen ZO der Wärmetauscheranordnung WA über das Erdreich hinausragen.

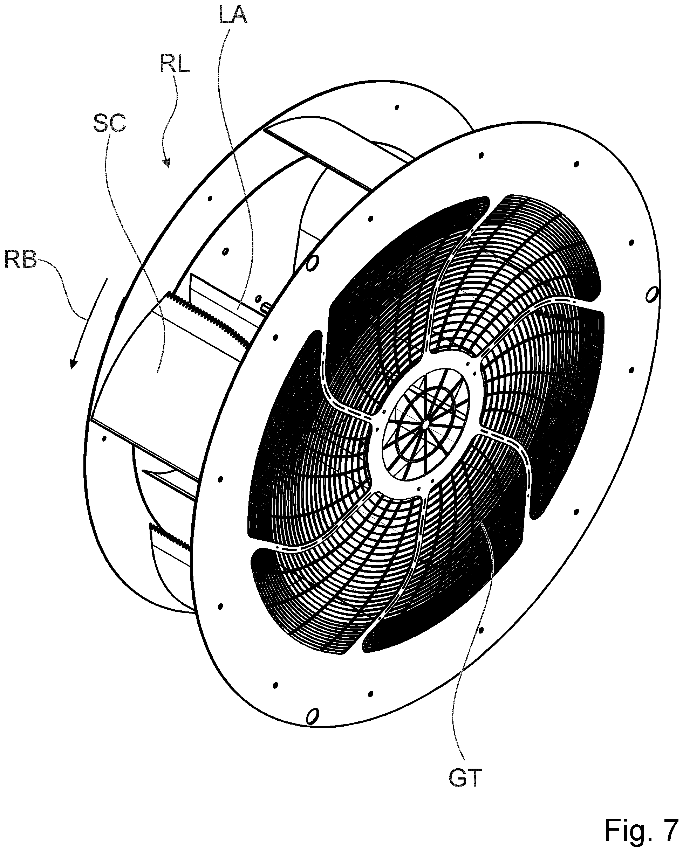

In Figur 7 ist in einer perspektivischen Darstellung eine weitere Ausführungsform eines Radiallüfters RL gezeigt. Der Radiallüfter RL weist dabei an seiner Oberseite ein Gitter GT auf, das der in Figur 1 dargestellten Austrittsöffnung AO entspricht. Der Radiallüfter RL weist wiederum mehrere Schaufel SC auf, welche in einem Rückwärtsbetrieb RB wie dargestellt in eine Drehbewegung versetzt werden können. Im Inneren befinden sich mehrere Lamellen LA. Durch die Drehbewegung der Schaufeln SC wird wiederum Luft radial von außen in das Innere der Anordnung gebracht, sodass die Luft über das Gitter GT in axialer Richtung entweichen kann. Im Gegensatz zur Ausführungsform nach Figur 4 ist hier jedoch eine wesentlich geringere Anzahl an Schaufeln SC und Lamellen LA vorgesehen.

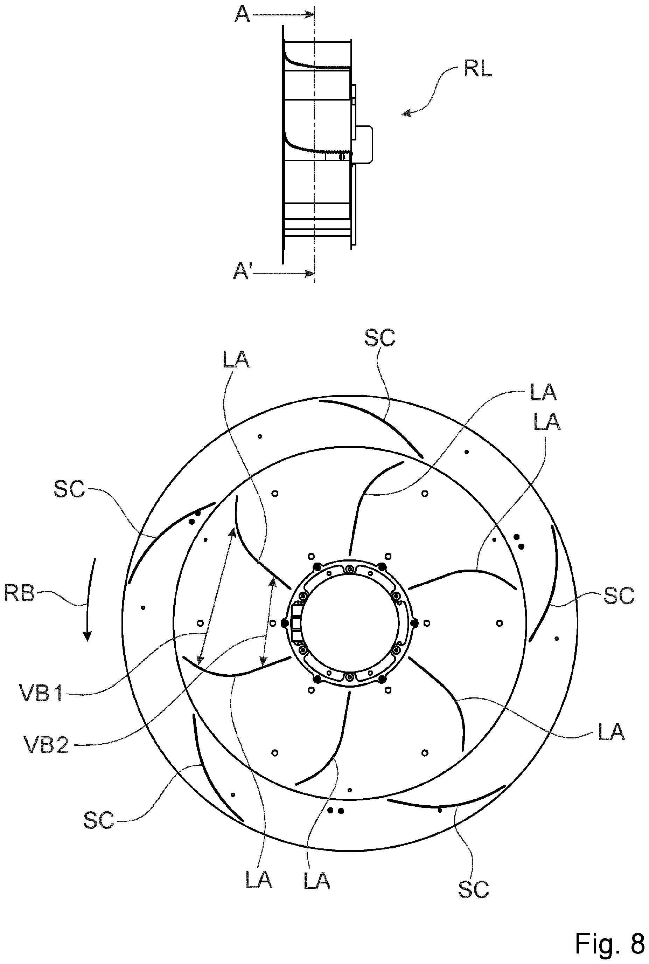

Die Funktionsweise des Radiallüfters RL lässt sich anhand der Figur 8 besser verdeutlichen. In Figur 8 ist eine Querschnittsansicht durch die Schnittebene A - A' des Radiallüfter RL wie dargestellt gezeigt. Man erkennt, dass im Rückwärtsbetrieb mehrere Schaufeln SC Luft radial nach Innen schieben. Zwischen den Lamellen LA bildet sich ein verjüngender Bereich aus, wie anhand der Abstände VB1 und VB2 zwischen zwei benachbarten Lamellen LA angedeutet ist. Da sich im verjüngenden Bereich eine Druckerhöhung einstellt, wird die Luft, ohne in Drehbewegung versetzt zu werden, axial nach oben durch das Gitter GT entweichen. Auf diese Weise lässt sich ein geräuscharmer Lüfterbetrieb erzeugen, bei dem wie für einen Luftwärmetauscher LT gemäß Figur 1 vorteilhaft ist, eine Luftströmung radial nach innen und axial nach oben zwischen der Saugseite und der Druckseite erreichen.

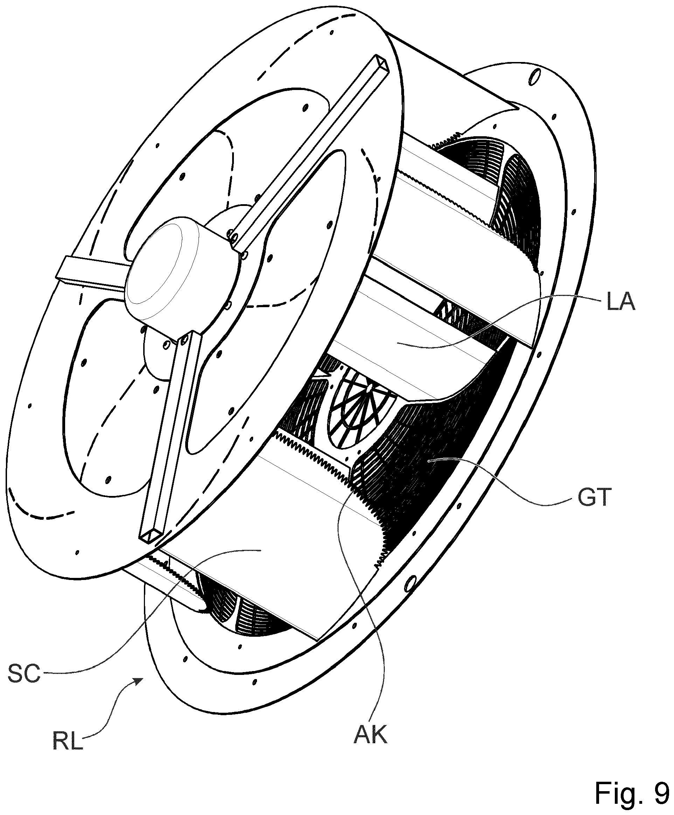

In Figur 9 ist der Radiallüfter RL nochmals in einer weiteren perspektivischen Darstellung gezeigt. Man erkennt, dass die innen liegenden Abrisskante AK der Schaufel SC des Radiallüfters RL mit einer Strukturierung, beispielsweise gezackt ausgebildet ist. Dies führt zu einer weitern Geräuschreduzierung. Des Weiteren ist die Abrisskante AK zum Gitter GT hingebogen ausgeführt, sodass der Bereich, aus dem die Luft austritt, nicht zusätzlich durch die Schaufel SC bedeckt wird. Auf diese Weise wird die Größe der Austrittsöffnung über das Gitter GT optimiert. Mit gezeigten Maßnahmen lässt sich sowohl eine geeignet große Luftfördermenge durch den Luftwärmetauscher LT führen als auch ein sehr geräuscharmer oder nahezu geräuschloser Betrieb erreichen. Insbesondere der letzte Aspekt ist bei dem Einsatz einer Wärmetauscheranordnung WA beispielsweise bei Privathaushalten oder bei Büros wünschenswert. Der Erfindung ist nicht auf die beschriebenen Ausführungsbeispiele beschränkt, aber der Schutzumfang der Erfindung wird ausschließlich durch die folgenden Ansprüche definiert.

## Patentansprüche

1. Wärmetauscheranordnung (WA) umfassend ein Gehäuse (GE), in dem umfangseitig eine Zuluftöffnung (ZO) angeordnet ist, einen Deckel (DE), der das Gehäuse (GE) an einer Oberseite überdeckt und in dem eine Abluftöffnung (AO) angeordnet ist, wobei innerhalb des Gehäuses (GE) ein rückwärtsbetriebener Radiallüfter (RL) so angeordnet ist, dass er einen bezüglich seiner Rotationsachse (RA) radial nach innen gerichteten Luftstrom zwischen der Zuluftöffnung (ZO) und der Abluftöffnung (AO) erzeugen kann, der mindestens einen im Gehäuse (GE) angeordneten Luftwärmetauscher (LT) durchströmt,
**dadurch gekennzeichnet,**
**dass** die Zuluftöffnung (ZO) zwischen Deckel (DE) und Gehäuse (GE) angeordnet ist und dass im Betrieb der durch den Radiallüfter (RL) erzeugte Luftstrom durch die Abluftöffnung (AO) nach oben gerichtet abströmt.

2. Wärmetauscheranordnung nach Anspruch 1, bei der der Radiallüfter (RL) eine Vielzahl von Schaufeln (SC) aufweist, die von einer Nachleitanordnung (NL) mit einer Vielzahl von Lamellen (LA) umgeben sind.

3. Wärmetauscheranordnung nach Anspruch 1 oder 2, bei der die Schaufeln (SC) des Radiallüfters (RL) und die Lamellen (LA) der Nachleitanordnung (NL) entgegengesetzt gekrümmt sind.

4. Wärmetauscheranordnung nach einem der Ansprüche 2 oder 3, bei der die Schaufeln (SC) des Radiallüfters (RL) entlang und parallel zu ihrer Hochachse (HS) mit gleichbleibender Krümmung ausgebildet sind.

5. Wärmetauscheranordnung nach einem der Ansprüche 2 bis 4, bei der die Lamellen (LA) der Nachleitanordnung (NL) entlang und parallel zu ihrer Hochachse (HL) mit gleichbleibender Krümmung ausgebildet sind.

6. Wärmetauscheranordnung nach einem der Ansprüche 2 bis 5, bei der sich zwischen den Lamellen (LA) nach Innen verjüngende Bereiche bilden, so dass der Luftstrom nach Innen hin eine Druckerhöhung erfährt.

7. Wärmetauscheranordnung nach einem der Ansprüche 1 bis 6, bei der sich der rückwärtsbetriebene Radiallüfter (RL) und die Nachleitanordnung (NL) entlang der Rotationsachse (RA) des Radiallüfters (RL) zumindest abschnittsweise überdecken.

8. Wärmetauscheranordnung nach einem der Ansprüche 1 bis 7, bei der die Zuluftöffnung (ZO) in einer Seitenwand (SW) des Gehäuses (GE) angeordnet ist, welches einen freistehenden Luftwärmetauscher (LT) umgibt.

9. Wärmetauscheranordnung nach einem der Ansprüche 1 bis 8, bei der der rückwärtsbetriebene Radiallüfter (RL) mittels eines Elektromotors (EM) angetrieben ist.

## Claims

1. A heat exchanger arrangement (WA) comprising a housing (GE) in which an air inlet opening (ZO) is arranged on the circumference, a cover (DE) that covers the housing (GE) on an upper side and in which an air outlet opening (AO) is arranged, a reverse-operated radial fan (RL) being arranged inside the housing (GE) in such a way that it can generate an air flow between the air inlet opening (ZO) and the air outlet opening (AO), which air flow is directed radially inward with respect to the axis of rotation (RA) of said radial fan and which flows through at least one air heat exchanger (LT) arranged in the housing (GE), **characterized in that**
the air inlet opening (ZO) is arranged between the cover (DE) and the housing (GE), and that during operation, the air flow generated by the radial fan (RL) flows upwards through the air outlet opening (AO).

2. The heat exchanger arrangement according to claim 1, wherein the radial fan (RL) has a plurality of blades (SC) that are surrounded by a guide arrangement (NL) having a plurality of fins (LA).

3. The heat exchanger arrangement according to claim 1 or 2, wherein the blades (SC) of the radial fan (RL) and the fins (LA) of the guide arrangement (NL) are curved in opposite directions.

4. The heat exchanger arrangement according to any of claims 2 or 3, wherein the blades (SC) of the radial fan (RL) are formed with a constant curvature along and parallel to their vertical axis (HS).

5. The heat exchanger arrangement according to any of claims 2 to 4, wherein the fins (LA) of the guide arrangement (NL) are formed with a constant curvature along and parallel to their vertical axis (HL).

6. The heat exchanger arrangement according to any of claims 2 to 5, wherein inwardly tapering regions are formed between the fins (LA) so that the air flow experiences an inward pressure increase.

7. The heat exchanger arrangement according to any of claims 1 to 6, wherein the reverse-operated radial fan (RL) and the guide arrangement (NL) are covered at least in portions along the axis of rotation (RA) of the radial fan (RL).

8. The heat exchanger arrangement according to any of claims 1 to 7, wherein the air inlet opening (ZO) is arranged in a sidewall (SW) of the housing (GE) that surrounds a free-standing air heat exchanger (LT).

9. The heat exchanger arrangement according to any of claims 1 to 8, wherein the reverse-operated radial fan (RL) is driven by means of an electric motor (EM).

## Revendications

1. Agencement d'échangeur de chaleur (WA) comprenant un boîtier (GE) dans lequel est disposée côté circonférence une ouverture d'arrivée d'air (ZO), un couvercle (DE) qui recouvre le boîtier (GE) sur un côté supérieur et dans lequel couvercle est disposée une ouverture d'évacuation d'air (AO), dans lequel un ventilateur radial (RL) fonctionnant en sens inverse est disposé à l'intérieur du boîtier (GE) de telle sorte qu'il peut générer un flux d'air orienté radialement vers l'intérieur par rapport à son axe de rotation (RA) entre l'ouverture d'arrivée d'air (ZO) et l'ouverture d'évacuation d'air (AO), lequel flux d'air traverse au moins un échangeur de chaleur à air (LT) disposé dans le boîtier (GE), **caractérisé en ce que**
l'ouverture d'arrivée d'air (ZO) est disposée entre le couvercle (DE) et le boîtier (GE) et **en ce que**, lors du fonctionnement, le flux d'air généré par le ventilateur radial (RL) s'écoule de manière à être dirigé vers le haut à travers l'ouverture d'évacuation d'air (AO).

2. Agencement d'échangeur de chaleur selon la revendication 1, dans lequel le ventilateur radial (RL) comprend une pluralité de pales (SC) qui sont entourées par un agencement suiveur (NL) comportant une pluralité d'ailettes (LA).

3. Agencement d'échangeur de chaleur selon la revendication 1 ou 2, dans lequel les pales (SC) du ventilateur radial (RL) et les ailettes (LA) de l'agencement suiveur (NL) sont courbées de manière opposée.

4. Agencement d'échangeur de chaleur selon l'une des revendications 2 ou 3, dans lequel les pales (SC) du ventilateur radial (RL) sont réalisées avec une courbure constante le long de leur axe vertical (HS) et parallèlement à celui-ci.

5. Agencement d'échangeur de chaleur selon l'une des revendications 2 à 4, dans lequel les ailettes (LA) de l'agencement suiveur (NL) sont réalisées avec une courbure constante le long de leur axe vertical (HL) et parallèlement à celui-ci.

6. Agencement d'échangeur de chaleur selon l'une des revendications 2 à 5, dans lequel des zones se rétrécissant vers l'intérieur se forment entre les ailettes (LA), de sorte que le flux d'air subit une augmentation de pression vers l'intérieur.

7. Agencement d'échangeur de chaleur selon l'une des revendications 1 à 6, dans lequel le ventilateur radial (RL) fonctionnant en sens inverse et l'agencement suiveur (NL) se chevauchent au moins dans certaines sections le long de l'axe de rotation (RA) du ventilateur radial (RL).

8. Agencement d'échangeur de chaleur selon l'une des revendications 1 à 7, dans lequel l'ouverture d'arrivée d'air (ZO) est disposée dans une paroi latérale (SW) du boîtier (GE), lequel boîtier entoure un échangeur de chaleur à air (LT) autonome.

9. Agencement d'échangeur de chaleur selon l'une des revendications 1 à 8, dans lequel le ventilateur radial (RL) fonctionnant en sens inverse est entraîné au moyen d'un moteur électrique (EM).
